# EUROPÄISCHE PATENTSCHRIFT

(11) **EP 0 845 342 B1**
(45) Veröffentlichungstag und Bekanntmachung des Hinweises auf die Patenterteilung: **12.09.2001**
(21) Anmeldenummer: 97111596.9
(22) Anmeldetag: 09.07.1997
(51) Int. Cl.: B29C 43/30, B29D 31/00

(54) **Bodenbelag und Verfahren zu dessen Herstellung**
Floor covering and method for its manufacture
Revêtement de sol et procédé pour sa fabrication

(30) Priorität: 29.11.1996 DE 19649708
(43) Veröffentlichungstag der Anmeldung: 03.06.1998
(73) Patentinhaber: Firma Carl Freudenberg, 69469 Weinheim (DE)
(72) Erfinder: Butscher, Alfons, 69488 Birkenau (DE); Heckel, Klaus, Dr., 69517 Gorxheimertal (DE); Nahe, Torsten, 67134 Birkenheide (DE)

(56) Entgegenhaltungen:
- EP-A- 0 582 770
- FR-A- 1 167 760
- US-A- 3 389 045
- US-A- 3 758 331

## Beschreibung

### Technisches Gebiet

Die Erfindung befaßt sich mit einem Bodenbelag aus Gummi, in dessen Oberfläche Granulate eingebettet sind, die sich zumindest in einer optischen und/oder physikalischen Eigenschaft voneinander unterscheiden.

### Stand der Technik

DE-42 26 766 A1 beschreibt einen mehrfarbig gemusterten Bodenbelag und dessen Herstellungsverfahren, wobei in eine Bahn mit einer ersten Farbe abweichend von dieser Farbe eingefärbtes Granulat in einer im wesentlichen gleichmäßigen Verteilung eingebettet ist. Sowohl die Bahn als auch das Granulat bestehen aus vernetzbaren Elastomeren, wobei das Granulat zumindest zwei voneinander und der Bahn abweichend eingefärbte Fraktionen von Partikeln umfaßt und die Menge und Farbe der Fraktionen so gewählt ist, daß die sich bei einer homogenen Durchmischung aller in dem Bodenbelag enthaltenen Bestandteile ergebende Mischfarbe und erste Farbe im wesentlichen übereinstimmen.

Während des Herstellungsverfahrens werden die Fraktionen voneinander getrennt granuliert, die Granulate miteinander vermischt, in einen Walzenkalander eingegeben und mit der Bahn vereinigt, wonach sich deren Vulkanisation anschließt.

Man erhält auf diese Weise den optischen Eindruck einer Mischfarbe, bestehend aus in die Bodenbelags-Oberfläche eingelassenen Farbflächen von 1 bis 25 mm². Es ist mit einem solchen Verfahren möglich, bei der Bodenbelagsherstellung entstehende Abfälle wieder vollständig in den Herstellprozeß einzubeziehen, wobei der Farbton der Grundbahn additiv aus jeweils gleichen Farbanteilen der eingestreuten Partikeln besteht.

Das beschriebene Verfahren ermöglicht es jedoch, diskrete Flächenbereiche der Bodenbelagsbahn unterschiedlich auszugestalten.

### Aufgabe der Erfindung

Bodenbeläge mit diskreten Flächenbereichen, die in ihren optischen und/oder physikalischen Eigenschaften voneinander abweichen, sind z.B. zur Lenkung von Besucherströmen in öffentlichen Gebäuden und Krankenhäusern sowie zur Kennzeichnung diskreter Arbeitsflächen in Industriebetrieben bekannt. Nicht bekannt sind der Anmelderin jedoch Ausführungsformen, bei welchen Flächenbereiche mit unterschiedlicher Charakteristik bezüglich der physikalischen und/oder optischen Eigenschaften kontinuierlich, fließend, ineinander übergehen. Solche Bodenbeläge und ein Verfahren zu deren Herstellung sind die Aufgabe der vorliegenden Erfindung. Die Vorteile eines solchen fließenden Übergangs sind bei den einzelnen Ausführungsformen im folgenden näher beschrieben.

### Darstellung der Erfindung

Gemäß der Erfindung besteht der Bodenbelag aus Gummi und liegt in Form einer Bahn vor, in deren Oberfläche ein Kautschuk-Granulat mit einer Korngröße (Siebfraktion) von 0,1 bis 40 mm, der Gesamtdicke des Bodenbelags und gegebenenfalls der gewünschten Optik angepaßt, eingebettet ist. Der Bodenbelag besitzt in Längs- und in Querrichtung flächig anisotrope Eigenschaften: Mindestens eine physikalische und/oder optische Eigenschaft des Bodenbelags geht kontinuierlich, bezüglich ihrer Charakteristik bzw. ihres physikalischen Meßwertes, in eine andere Charakteristik bzw. in einen anderen Meßwert über, wobei diese Übergänge sich periodisch wiederholen können.

Der kontinuierliche, fließende Übergang der Eigenschaften wird dabei durch Art und Menge des eingebetteten Granulats bestimmt.

In einer bevorzugten Ausführungsform der Erfindung erfolgen die stufenlosen Änderungen in der physikalischen und/oder optischen Charakteristik zwischen den einzelnen Flächenbereichen quer zur Fertigungsrichtung des Bodenbelags. Bevorzugt ist diese Variante deshalb, weil sie verfahrenstechnisch besonders leicht ausführbar ist und verlegetechnisch keiner besonderen Einschränkungen bedarf.

Bezieht man sich bezüglich der stufenlosen Änderung in der Eigenschaft der einzelnen Flächenbereiche auf den optischen Eindruck, z.B. die Intensität der Leuchtkraft der Bodenbelags-Oberfläche, so lassen sich ansprechende Effekte erzielen, welche insbesondere in Präsentationsräumen, wie Ausstellungen und Schaufenstern, Anwendung finden können.

Gleiches gilt für den Glanzgrad, dessen Intensität beispielsweise im Bereich von Präsentationsflächen auf der Fußbodenbelags-Oberfläche stärker ausgebildet ist als in den vom Publikum begangenen Bereichen, wo ein solcher Glanz den negativen Eindruck eines allzu glatten Belages vermitteln würde oder wo die Abnutzung des Glanzes durch Trittspuren das Erscheinungsbild des Belages in nicht ansprechender Weise mit der Zeit verändern würde.

Auch durch kontinuierliche, insbesondere periodisch sich wiederholende Veränderung des Farbtones der Bodenbelags-Oberfläche kann eine ansprechende Optik erzielt werden. Ferner kann die Abfolge der Veränderungen so ausgestaltet werden, daß die unterschiedlichen Farben der Lenkung von Besucherströmen in Kaufhäusern, Krankenhäusern, Flughäfen und Behörden dienen können. Beispielsweise würde der Besucher auf optische Weise darauf hingewiesen, daß er im Begriff ist, einen andersartigen Bereich des Gebäudes zu betreten.

In allen genannten Fällen kann der optische Eindruck durch entsprechende Beleuchtung noch verstärkt oder variiert werden. Zudem ist es möglich, die Übergänge bezüglich des Glanzgrades, der Leuchtkraft und der Farbe miteinander zu kombinieren, was unzählige Gestaltungsmöglichkeiten in künstlerischer wie praktischer Hinsicht zur Folge hat.

Eine andere Variante der Erfindung geht davon aus, daß sich der elektrische Ableitwiderstand, gemessen nach DIN 51 953, in den Grenzen von 1x10³ Ohm und 10¹⁰ Ohm kontinuierlich verändert. Z.B. bei der Leiterplattenproduktion sind die Bodenbereiche um die Produktionsanlagen zur Vermeidung elektrostatischer Zerstörung der Bauteile elektrisch leitend ausgeführt; das Personal befindet sich also in elektrisch leitender Verbindung mit dem Fußbodenbelag. Aufgrund der örtlichen Begrenzung der Arbeitsplätze ist es nicht notwendig, den gesamten Fußbodenbelag einer Produktionsstätte derart leitfähig auszugestalten. Damit nun für die Beschäftigten der elektrisch leitende Bereich sicher erkennbar ist, schlägt die Erfindung vor, die Flächen mit höchster Leitfähigkeit in Kombination mit einer der oben genannten optischen Eigenschaften auszugestalten. Diese lassen auch den allmählichen Übergang in die nicht leitfähigen Zonen des Bodenbelags erkennen, was sich durch Farbänderung, Änderung der Leuchtkraft oder des Glanzgrades sehr gut optisch darstellen läßt. Der Vorteil gegenüber einer abrupten Abgrenzung der einzelnen Bereiche liegt z.B. darin, daß für das Personal der Arbeitsplatz, also die bei der Handhabung mit den elektronischen Bauteilen zu benutzende Fläche, nicht einengend abgegrenzt erscheint. Neben dieser psychologischen Wirkung ist auch gewährleistet, daß in einer weiter entfernten Zone vom eigentlichen Arbeitsplatz noch ein Ableitwiderstand vorliegt, der zwar arbeitstechnisch nicht mehr optimal ist, jedoch noch so niedrig, daß auch in diesem Außenbereich mit einer gewissen Sicherheit elektronische Bauteile zerstörungsfrei gehandhabt werden können.

Eine weitere Ausgestaltung der Erfindung geht von fließenden Übergängen in der Rauheit einzelner Zonen des Bodenbelages aus. Dies ist z.B. in potentiell durch Nässe oder Feuchtigkeit beaufschlagten Bereichen sinnvoll, um die Rutschgefahr zu vermeiden. Ein Beispiel wäre der Bereich eines Hallenbades zwischen der Naßzone und dem Foyer, in welchem eine größere Rutschfestigkeit bei Nässe nicht mehr erforderlich ist. Der allmähliche Übergang der Zonen würde so analog der verschleppten Feuchtigkeit zu- bzw. abnehmen.

Das erfindungsgemäße Verfahren wird dergestalt durchgeführt, daß man auf eine noch weichelastische, kontinuierlich bewegte Kautschukbahn vor deren Vulkanisation mindestens zwei verschiedene Arten von Kautschukpartikeln in einer Korngröße bzw. Siebfraktion von 0,1 bis 40 mm aufstreut. Die Korngröße hängt dabei von der zu erzielenden Eigenschaft und von der Endmaterialdicke des Bodenbelags ab; geeignete Werte innerhalb des gesetzten Rahmen sind anhand von Vorversuchen leicht ermittelbar und die Auswirkungen auf die Oberflächeneigenschaften meßbar.

Man verwendet erfindungsgemäß mindestens zwei Arten von Partikeln, deren physikalische und/oder optische Eigenschaftswerte zahlenmäßig voneinander verschieden sind. Bei diesen Eigenschaften kann es sich beispielsweise um die Leuchtkraft, den Glanzgrad, den Farbton, den elektrischen Ableitwiderstand oder die Unregelmäßigkeit der Oberfläche handeln.

Ebenfalls im Interesse der Arbeitssicherheit ist es möglich, einen Bodenbelag zu verwenden, dessen Oberfläche eingebettete Partikeln enthält, welche bei Stromausfall und damit völliger Dunkelheit infolge ihrer Eigenleuchtfähigkeit eine breite, nicht abrupt abgegrenzte Notleitfläche markieren.

Die Kautschukpartikeln liegen als Schüttung in einem nach oben und unten offenen Trichterkasten und auf der Oberseite einer unter dem Trichterkasten befindlichen Dosierwalze auf. Die Längsachse dieser Dosierwalze verläuft quer zur Laufrichtung der weichelastischen Kautschukbahn. Der Umfang der Walze dreht sich gleichsinnig zu deren Laufrichtung.

Infolge der Drehung der Walze gelangen die Kautschukpartikeln auf deren Oberfläche in den Spalt zwischen der Unterkante des Trichterkastens und der Walzenoberfläche. Dieser Spalt ist durch eine verstellbare Bürstenrakel in seiner Breite bestimmt.

Die Oberfläche der Dosierwalze ist mit einer Vielzahl axial verlaufender, verschieden tief ausgestalteter, versetzt zueinander angeordneter Rillen oder Vertiefungen versehen, welche durch die Kautschukpartikeln ausgefüllt werden. Diese Rillen dienen also als Vorratsbehälter, aus denen die Kautschukpartikeln gemäß der Anordnung, Tiefe und Zahl der Rillen auf die Oberfläche der Kautschukbahn auftreffen.

Den Tiefenunterschieden, der Anzahl und der Anordnung der parallel zur Walzenachse verlaufenden Rillen sind keine Grenzen gesetzt; diese Rillen oder Vertiefungen sind leicht herstellbar, so daß durch Versuche die jeweils idealen Ausgestaltungen für die jeweils zu schaffenden Oberflächen des Fußbodenbelags leicht getestet werden können. Die beaufschlagte Materialbahn kann mit bekannten Methoden zur Endvulkanisation zum fertigen Bodenbelag verarbeitet werden.

## Patentansprüche

1. Bodenbelag aus Gummi, bestehend aus einer Bahn mit in deren Oberfläche eingebettetem Kautschuk-Granulat mit einer Korngröße (Siebfraktion) von 0,1 bis 40 mm, wobei der Bodenbelag in Längs- und Querrichtung flächig anisotrope Eigenschaften, d.h. mindestens eine physikalische und/oder optische Eigenschaft, besitzt, deren Charakteristik im Verlauf der Belagsoberfläche sich mindestens einmal ändert, wobei diese Änderung der Charakteristik einer Eigenschaft in eine andere Charakteristik der gleichen Eigenschaft stufenlos erfolgt.

2. Bodenbelag nach Anspruch 1, **dadurch gekennzeichnet, daß** der stufenlose Übergang der Charakteristik jeweils quer zur Fertigungsrichtung des Bodenbelags verläuft.

3. Bodenbelag nach Anspruch 1 oder 2, **dadurch gekennzeichnet, daß** sich die Intensität der Leuchtkraft verändert.

4. Bodenbelag nach Anspruch 1 oder 2, **dadurch gekennzeichnet, daß** sich die Intensität des Glanzgrades verändert.

5. Bodenbelag nach Anspruch 1 oder 2, **dadurch gekennzeichnet, daß** sich der Farbton der Belagsoberfläche verändert.

6. Bodenbelag nach einem der Ansprüche 3 bis 5, **dadurch gekennzeichnet, daß** sich der elektrischen Ableitwiderstand nach DIN 51 953 in den Grenzen von 1×10³ Ohm und 10¹⁰ Ohm verändert.

7. Bodenbelag nach einem der Ansprüche 1 bis 5, **dadurch gekennzeichnet, daß** sich die Rauheit der Oberfläche ändert.

8. Verfahren zur Herstellung eines Bodenbelags aus Gummi, bei welchem auf eine noch weichelastische, kontinuierlich bewegte Kautschukbahn vor deren Vulkanisation mindestens zwei Arten von Kautschukpartikeln mit gleicher Eigenschaft, jedoch unterschiedlicher Charakteristik dieser Eigenschaft, mit einer Korngröße (Siebfraktion) von 0,1 bis 40 mm aufgestreut werden, indem die Kautschukpartikeln aus einem Trichterkasten auf die Oberfläche einer unter dem Trichterkasten befindlichen Dosierwalze gelangen, deren Längsachse quer zur Laufrichtung der Kautschukbahn angeordnet ist und die sich gleichsinnig zur Laufrichtung zur Kautschukbahn dreht, wobei anschließend durch diese Drehbewegung der Walze die Kautschukpartikeln eine verstellbare Bürstenrakel passieren, welche das Ausmaß des Spaltes zwischen einer Unterkante des Trichterkastens und der Dosierwalze-Oberfläche bestimmt, wobei sich ferner die Kautschukpartikeln während ihres Transportes von der Oberfläche der sich drehenden Dosierwalze bis zu der unter der Walze befindlichen Kunststoffbahn in auf der Oberfläche der Dosierwalze in einer Vielzahl versetzt zueinander angeordneten Rillen befinden, welche unterschiedliche Tiefe bzw. Volumina aufweisen und jeweils parallel zur Längsachse der Walze verlaufen, und wobei zuletzt die bestreute Kautschukbahn einer Endvulkanisation mit üblichen Mitteln unterzogen wird.

## Claims

1. A floor covering made of rubber, comprising a sheet with rubber granules embedded in its surface, the said granules having a grain size (screening fraction) of 0.1 to 40 mm and the floor covering having in the longitudinal and transverse directions two-dimensionally anisotropic properties, i.e. at least one physical and/or visual property, of which the characteristics change at least once over the surface of the covering, this change in the characteristics of a property into other characteristics of the same property taking place steplessly.

2. A floor covering according to claim 1, **characterized in that** the stepless transition of the characteristics proceeds in each case transversely with respect to the direction of production of the floor covering.

3. A floor covering according to claim 1 or 2, **characterized in that** the intensity of the luminosity changes.

4. A floor covering as claimed in claim 1 or 2, **characterized in that** the intensity of the gloss changes.

5. A floor covering as claimed in claim 1 or 2, **characterized in that** the colour of the surface of the covering changes.

6. A floor covering according to any one of claims 3 to 5, **characterized in that** the electrical resistance to the dissipation of static charges according to DIN 51 953 changes within the limits of 1×10³ ohms and 10¹⁰ ohms.

7. A floor covering according to any one of claims 1 to 5, **characterized in that** the roughness of the surface changes.

8. A method for the manufacture of a floor covering made of rubber, in which particles of at least two types of rubber with the same property, but different characteristics of this property, and with a grain size (screening fraction) of 0.1 to 40 mm are scattered onto a still pliable, continuously moved sheet of rubber before it is vulcanized, said scattering taking place by the particles of rubber passing from a hopper onto the surface of a metering roll which is located under the hopper, the longitudinal axis of which roll is arranged transversely with respect to the running direction of the rubber sheet and which roll rotates in the same direction as the running direction of the rubber sheet, this rotational movement of the roll subsequently causing the particles of rubber to pass an adjustable brush-type wiper, which determines the size of the gap between a lower edge of the hopper and the surface of the metering roll, the particles of rubber as they are being transported from the surface of the rotating metering roll to the sheet of plastic located under the roll also being located in a multiplicity of grooves which are arranged offset in relation to one another on the surface of the metering roll, have different depths or volumes and in each case run parallel to the longitudinal axis of the roll, and the sheet of rubber scattered with said particles lastly being subjected to a final vulcanization with customary means.

## Revendications

1. Revêtement de sol en caoutchouc, formé par un lé comprenant un granulat de caoutchouc intégré dans sa surface et dont la grosseur de grain (fraction granulométrique) est comprise entre 0,1 et 40 mm, le revêtement de sol possédant des propriétés anisotropes dans deux dimensions, dans la direction longitudinale et la direction transversale, c'est-à-dire possédant au moins une propriété physique et/ou optique dont la caractéristique change au moins une fois dans le cours de la surface du revêtement, ce changement de la caractéristique d'une propriété en une autre caractéristique de la même propriété se faisant de manière progressive.

2. Revêtement de sol selon la revendication 1, **caractérisé en ce que** le changement progressif de la caractéristique se déroule à chaque fois transversalement par rapport à la direction de fabrication du revêtement de sol.

3. Revêtement de sol selon l'une des revendications 1 ou 2, **caractérisé en ce que** la force de l'intensité lumineuse se modifie.

4. Revêtement de sol selon l'une des revendications 1 ou 2, **caractérisé en ce que** l'intensité du degré de brillance se modifie.

5. Revêtement de sol selon l'une des revendications 1 ou 2, **caractérisé en ce que** la nuance de couleur de la surface du revêtement change.

6. Revêtement de sol selon l'une des revendications 3 à 5, **caractérisé en ce que** la résistance de fuite électrique selon DIN 51 953 se modifie dans les limites de 1x10³ Ohm et 10¹⁰ Ohm.

7. Revêtement de sol selon l'une des revendications 1 à 5, **caractérisé en ce que** la rugosité de la surface se modifie.

8. Procédé de fabrication d'un revêtement de sol en caoutchouc, dans lequel on répand sur un lé en caoutchouc encore souple déplacé de manière continue, avant sa vulcanisation, au moins deux types de particules de caoutchouc ayant la même propriété mais une caractéristique différente de cette propriété et ayant une grosseur de grain (fraction granulométrique) comprise entre 0,1 et 40 mm, en faisant en sorte que les particules de caoutchouc provenant d'une caisse de trémie arrivent sur la surface d'un cylindre de dosage situé sous la caisse de trémie, dont l'axe longitudinal est transversal par rapport à la direction d'avancée du lé en caoutchouc et qui tourne dans le même sens que la direction d'avancée du lé en caoutchouc, les particules de caoutchouc passant ensuite, grâce à ce mouvement rotatif du cylindre, sous une racle à balais réglable qui détermine la dimension de la fente entre un bord inférieur de la caisse de trémie et la surface du cylindre de dosage, les particules de caoutchouc se trouvant en outre, pendant leur transport de la surface du cylindre de dosage en rotation jusqu'au lé en matière plastique situé sous le cylindre, dans une pluralité de rainures décalées les unes par rapport aux autres situées sur la surface du cylindre de dosage, qui présentent des profondeurs resp. volumes différents et sont à chaque fois parallèles à l'axe longitudinal du cylindre, et le lé en caoutchouc sur lequel sont répandues les particules étant finalement soumis à une vulcanisation finale grâce aux moyens habituels.
